# EUROPEAN PATENT APPLICATION

(11) **EP 0 748 741 A1**
(43) Date of publication of application: **18.12.1996**
(21) Application number: 96830241.4
(22) Date of filing: 29.04.1996
(51) Int. Cl.: B65D 1/02

(54) **Latching device to avoid the expansion of compressible containers after their compression**

(30) Priority: 15.06.1995 IT RM950143 U
(71) Applicant: Ficini, Rodolfo, 00050 Castel di Guido (Roma) (IT); Ficini, Carlo, 00050 Castel di Guido (Roma) (IT); Ficini, Vittoria, I-00152 Roma (IT)
(72) Inventor: Ficini, Rodolfo, 00050 Castel Di Guido, Roma (IT)
(74) Representative: Iannone, Carlo Luigi

(57) **Abstract**

The invention relates to a latching device (2; 10 ; 14; 17; 21) to avoid the expansion of compressible containers (1) after their compression, characterised in that at least one part of the latching device (2; 10; 14 ; 17; 21) is coupled to the body of the container (1) or to the stopper of the same and another part can be coupled to any point of the surface of the container(1), or to the neck of the container, to prevent its expansion after its compression.

## Description

The present finding refers to a latching device useful to prevent that a container, compressed after having been used, takes again its original shape. This less bulky shape of the container latched by the latching device in the compressed state allows a less bulky collection of the wastes or rubbish.

Containers or bottles made up of polyethylene terephalate or polyvinyl chloride (PET or PVC) or other plastics materials are well known from many time, said containers or bottles being compressible after their use but having the drawback of taking again completely or partially the original shape.

These containers, once emptied, give problems to the consumers since they occupy many space before being eliminated as waste. Further, their encumbrance is such that they very rapidly fill the rubbish bucket.

In order to solve this problem, according to the present invention, a latching device is applied, fixedly or removable, to the container or bottle, or to its stopper, during the production or bottling stage, or in a following moment, and the consumer will use this latching device, that can be comprised of an elastic, a band, a lace or like, to fix one of its ends to the neck or close to the neck, and the other end in a suitable point of the compressed and deformed container, or again on the same neck, thus avoiding its expansion.

The finding gives many advantages:
- optimisation of the waste volume;
- simplification of the differentiated collection;
- a better exploitation of the waste tanks;
- an advantage for the water, beverage and like producers, or for the producers of the containers to be eliminated since they will demonstrate an environmental sensitivity proposing containers that simplify the collection and eventually recyclable;
- different coloration of the latching device to facilitate the recycling of different plastic materials.

It is therefore specific object of the present invention a latching device to avoid the expansion of compressible containers after their compression, characterised in that at least one part of the latching device is coupled to the body of the container or to the stopper of the same and another part can be coupled to any point of the surface of the container, or to the neck of the container, to prevent its expansion after its compression.

Preferably, according to the invention, said latching device can be made up of a plurality of annular elements or partially circular crowns, centrally provided with a hole and coupled each other along one side so as to be folded in the rest position with the respective holes coinciding, and to be extensible in order to substantially take the shape of a strip, so that one of said end annular elements remains coupled to the neck of the container and the other one, after having passed the latching device around said container, couples with the neck of the same container after its compression.

Particularly, said latching element can be removably provided on the neck of said container, or it can have the lower annular element fixed on the same neck.

Further, on the end annular element coupled with the neck after having passed the latching device around the compressed container a grip tongue can be provided.

According to another embodiment of the latching element according to the invention, it can be comprised of a strip, completely or partially adhesive on the surface.

Further, according to the invention, it can be partially elastic and windable around the container body when compressed.

Always according to the invention, the fixed part is comprised of a ring provided around the neck of the container and from the same neck a second elastic ring extends, said second ring being suitable to be coupled with a projection of the reduced volume container.

Still according to the invention, one end of the adhesive strip can be provided with a hole coupable to the neck of the container.

According to another embodiment of the latching device according to the invention, it can be comprised of a strip having a hole realised in one of its ends to receive the neck of the container during the production or bottling step, or during a following step, a second hole or slot being provided at the opposite end of the strip to receive the neck of the container after the winding of the strip around the compressed container.

Particularly, on the second hole or slot coupable with the neck of the container after having passed said latching element around the compressed container a grip tongue can be provided.

In a further embodiment of the latching element according to the invention, it can be made up of a spiral of concentric rings, the innermost of said ring could coincide with the safety ring of the stopper of the container, said spiral being unwindable so as to bring the outermost ring, after having passed the unwound spiral around the compressed container, to couple with the container neck.

Preferably, said rings can be coupled by breaking points.

Further, on the outer ring of the spiral, a grip tongue can be provided.

Still according to the invention, said latching device can be placed before its use, in any point of the container.

Furthermore, said latching device can be realised, before its use, as a sole body with the label.

According to a further embodiment of the latching device according to the invention, it can be comprised by the label of the container, said label providing one part coupled with the container and a second part provided with means for its detaching from the same container and the spreading of the label, and further at least a slot provided on said label in such a way that when the container is compressed, and the label is wound about the compressed container, said at least one slot couple with the neck of the container.

Preferably, said label is realised with the same material of the container or by materials compatible for recycling reasons.

Furthermore, according to the invention, said at least one slot can have a circular, elongated, or irregular shape.

Further, according to the invention, said first part of the label is fixed on the body of the container, or it can be detached and fixed in a different position for the use of the latching device.

Always according to the invention, said means for detaching the label can be made up of a lifting edge or tongue.

The label can be provided according to every orientation with respect to the body of the container.

Always according to the invention, said latching device can free fragrances after its compression.

Finally, said latching device can be made up of material, for example paper, that can break during the recycling operations, in order to allow a partial dilatation of the container during these operations.

The invention will be now described for illustrative but not limitative purposes with reference to its best embodiments, wherein:
figure 1 shows a plastic bottle comprising an embodiment of the latching device shaped as a strip;
figure 2 shows the back side of the strip of figure 1;
figure 3 shows the bottle of figure 1 compressed, with one end of the strip applied in the region close to the neck of the bottle and the other end applied in another point of the surface of the bottle to prevent its "expansion";
figure 4 shows a bottle wherein the double ring latching device comprises an elastic part;
figure 5 shows the double ring latching device, one ring being applied on the bottle neck and the other one, free, can be extended and forms the elastic portion;
figure 6 shows the bottle of figure 4 compressed, wherein the elastic part is provided around the body of the bottle to prevent its "expansion";
figure 7 shows a top view of a third embodiment of the latching device according to the invention;
figure 8 shows the latching device of figure 7 open;
figure 9 shows the latching device of figure 7 provided on the neck of a bottle;
figure 10 shows the bottle of figure 9 compressed with the latching device in an operative position;
figure 11 shows a top view of a fourth embodiment of the latching device according to the invention;
figure 12 shows the latching device of figure 11 open;
figure 13 shows the latching device of figure 11 provided on the neck of a bottle;
figure 14 shows the bottle of figure 13 compressed with the latching device in an operative position;
figure 15 shows a top view of a fifth embodiment of the latching device according to the invention;
figure 16 shows the latching device of figure 15 open;
figure 17 shows the latching device of figure 15 provided on the neck of a bottle;
figure 18 shows the bottle of figure 17 compressed with the latching device in an operative position;
figure 19 shows a front view of a sixth embodiment of the latching device according to the invention;
figure 20 shows the embodiment of figure 19 with the detached label; and
figure 21 shows the bottle of figure 19 having the latching device in an operative position.

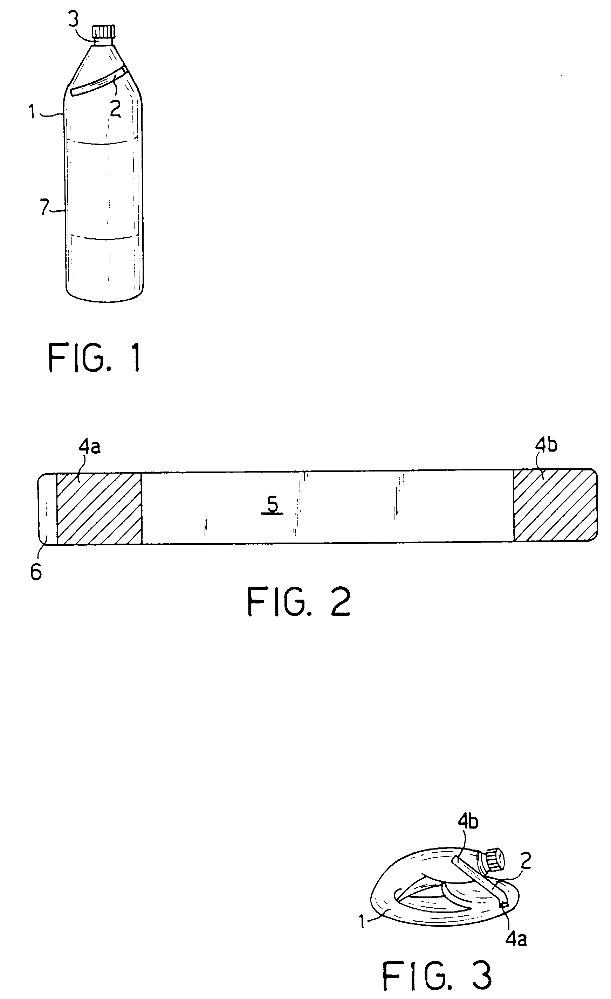

Making reference to the drawings, the same reference numbers refers to similar parts of the product in all the figures 1 - 18.

Figure 1 shows the bottle 1 having a strip 2 provided near the neck 3.

The strip 2 adheres to the bottle by its back side comprising two adhesive regions 4a and 4b, and a non- adhesive central region 5.

Furthermore, the back side of the strip 2 comprises also a grip tongue 6, without the adhesive layer.

Figure 3 shows how the strip 2 is placed in the operative step.

The end 4b can be detached and fixed again in a suitable point, or it can remain fixed (depending on the initial position of the strip on the undeformed bottle) while the end 4a is in any case detached by the user gripping the grip tongue 6 and is then fixed again in a suitable point of the bottle 1, after the compression of he same bottle.

The strip 2 prevents then the "expansion" of the bottle 1.

The strip 2 could be also provided in any position on the bottle, under the central label 7 or in such a way to be a sole body with the label.

Eventually, the strip 2 can be elastic and shaped in such a way that its expansion induces the emanation of fragrances to make the waste basket perfumed.

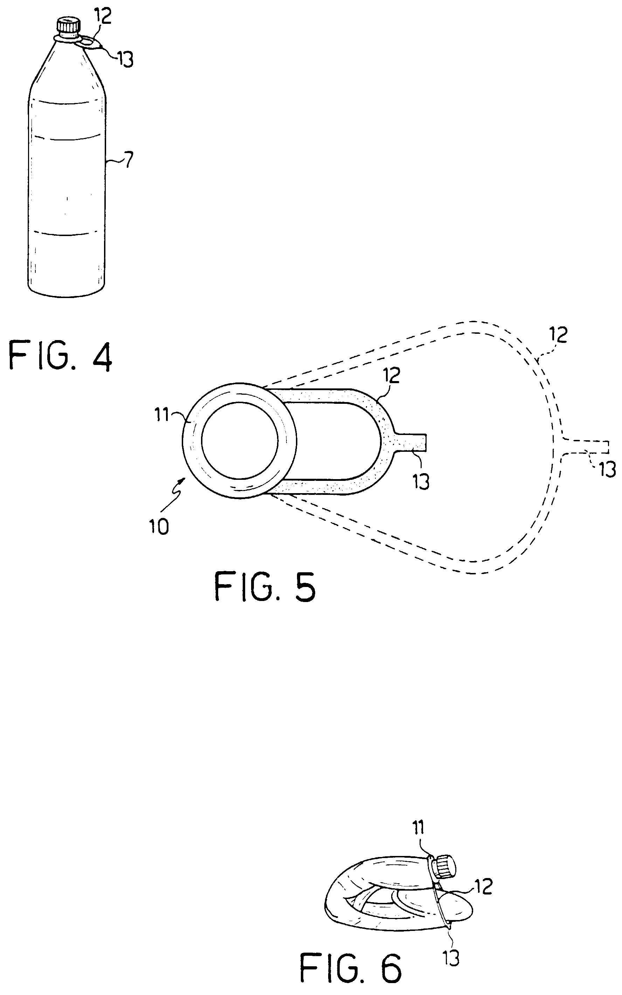

In figures 4 - 6, the latching device is a double ring latching device 10 provided on the neck of the bottle during the bottling or the production of the same.

The double ring 10 comprises a ring 11 and an elastic portion 12 provided with a grip tongue 13. The two portions 11, 12 can be coupled together in anyway or they can be realised as a sole piece.

The double ring 10 can be integral with the stopper of the bottle.

As it can be noted in figure 6, the elastic portion 12 is expanded and placed around the bottle maintaining the same compressed.

According to the present invention, it can be also used a non-adhesive strip 2, provided with two holes or slots on its ends 4a and 4b, receiving the neck of the bottle. The strip 2 is placed around the neck of the bottle when compressed.

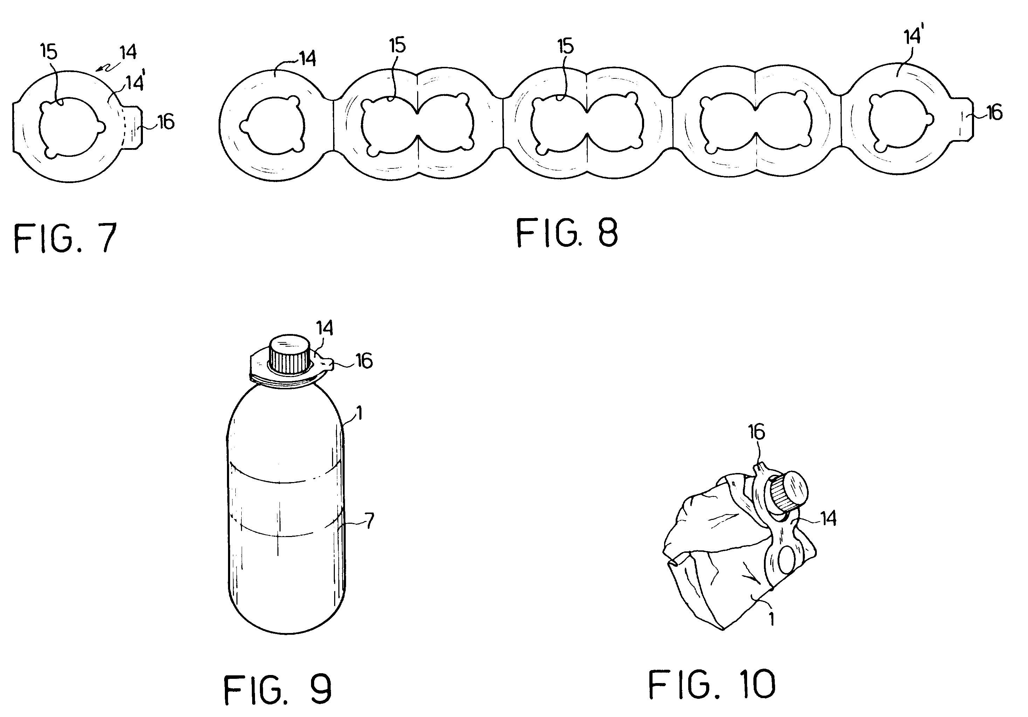

Making now reference to figures 7 - 10, it is shown a further embodiment of the latching device according to the invention.

In this case, the latching device 14 is made up of a plurality of annular elements 14', coupled each other on one side and centrally provided with a hole 15, said elements 14', in the rest position, when the latching device is provided on the neck of the bottle 1, are folded one above the other, as shown in figure 7.

On the end annular element 14', i.e. the one that in the position shown in figure 7 or 9 is the uppermost, a grip tongue 16 is provided.

The application of the latching device 14 easily occurs during the production stage of the bottle or during the bottling.

As it is well evident, either in this embodiment or in the others, it is not compulsory that the application occurs during the production or bottling stage, this feature not being limitative of the scope of the invention.

The user, once compressed and folded the bottle 1, must only take the tongue 16, uncoupling the various annular elements 14' from the neck of the bottle 1, and pass the extended latching device 14 under the compressed bottle, bringing the last annular element 14', i.e. the one provided with the tongue 16, in a position allowing that the same is coupled again with the neck of the bottle 1.

The position shown in figure 10 is reached, and thus by the action of the latching device 14, the bottle cannot "expand".

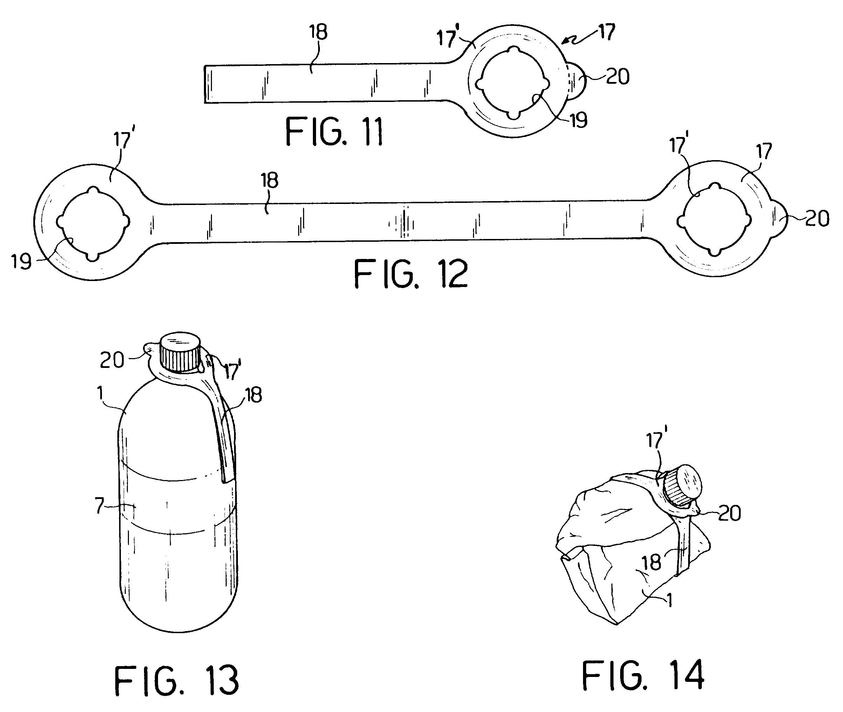

Coming now to observe figures 11 - 14, it is shown a further embodiment of the latching device according to the invention.

The latching device 17 is made up of two annular elements 17', coupled each other on one side by a strip 18 and centrally provided with a hole 19.

In the rest position, when the latching device 17 is provided on the neck of the bottle 1, the strip 18 is folded, as shown in figure 11, and the holes 19 of the annular elements 17' are provided around the neck of the bottle 1 (see figure 13).

On the annular element 17', which is upper in figure 11 or 13, a grip tongue 20 is provided.

The application of the latching device 17 easily occurs during the production stage of the bottle or during the bottling.

The user, once compressed and folded the bottle 1, must only take the tongue 20, uncoupling the upper annular element 17' from the neck of the bottle 1, extending the strip 18 having a suitable length.

Then, the latching device 17 is passed under the compressed bottle, bringing the annular element 17' provided with the tongue 20, in a position allowing that the same is coupled again with the neck of the bottle 1.

The position shown in figure 14 is reached, and thus, by the action of the latching device 17, the bottle cannot "expand".

A further embodiment of the latching device according to the invention is shown in figures 11 - 14.

In this case, the latching device 21 is made up of a spiral of concentric rings 21', at the beginning coupled each other by breaking points, the innermost of said rings coinciding with, but this is not compulsory, the safety ring of the stopper 22 of the bottle 1.

On the outermost ring 21' of the spiral 21 a grip tongue 23 is provided.

The application of the latching device 21 coincides with the application of the stopper 22 on the bottle 1.

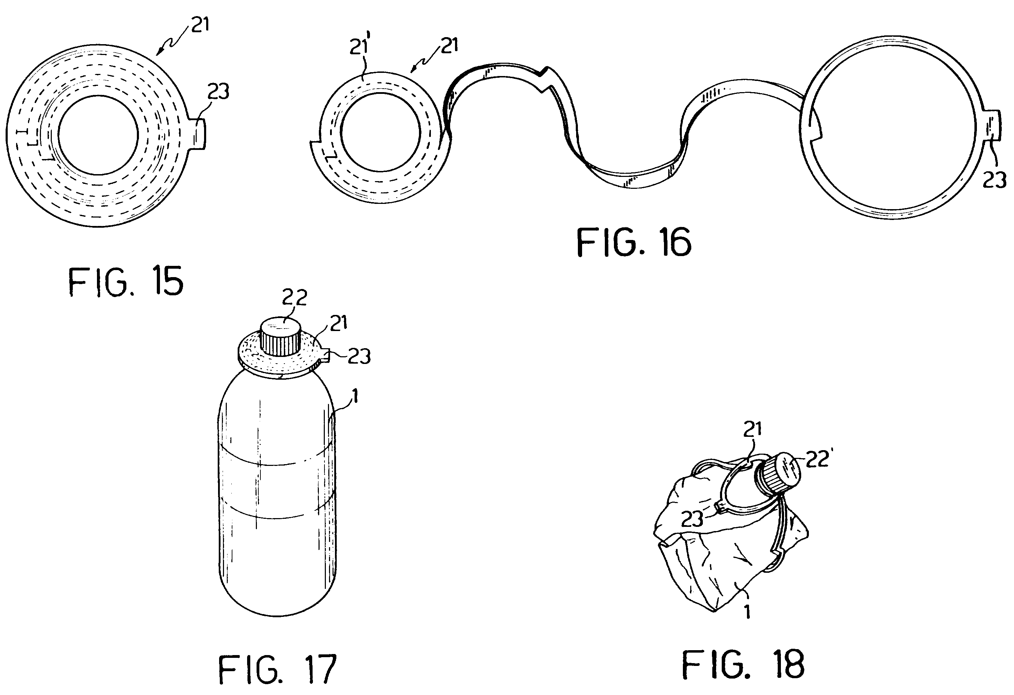

The user, once compressed and folded the bottle 1, must only take the tongue 23, break the various breaking points between the single rings 21' of the latching device 21, extending the latching device (see figure 16), pass the extended latching device 21 under the compressed bottle, bring the outer ring 21' in a position allowing that the same is coupled again with the neck of the bottle 1.

The position shown in figure 18 is reached, and thus, by the action of the latching device 21, the bottle cannot "expand".

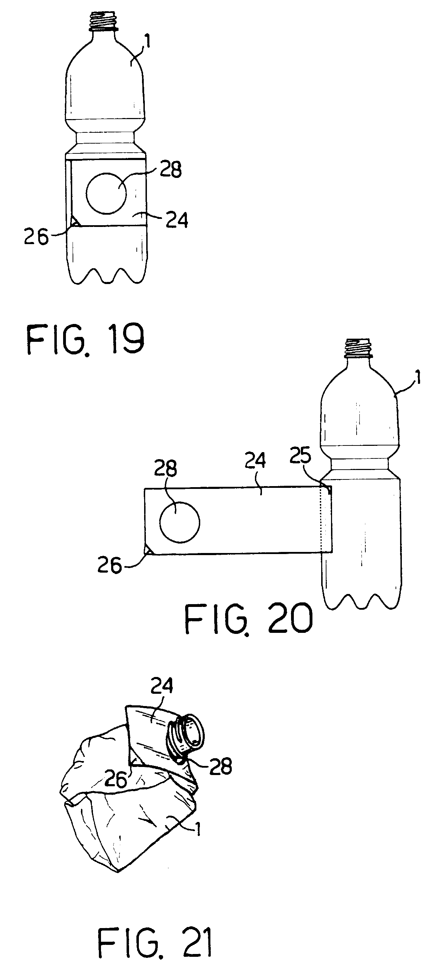

Referring now to figures 19 - 21, a further embodiment of the latching device according to the invention is shown providing the realisation of a label 24, having one end 25 fixed to the body of the bottle 1 and provided on the other end with a lifting tongue 26.

Label 24 is preferably realised by the same material of the bottle 1, or by a material compatible for recycling reasons, in such a way to avoid problems for the disposal of the bottle and for its recycling.

A slot 28 is realised on the label 24, said slot being in the figures shown for reasons of clarity as circular, but it can have a different shape, in function of the specific needing and of the features of the material employed.

To use the latching device shown in figures 19 - 21, it is sufficient to lift the tongue or edge 26 and detach the label 24 until reaching the position of figure 20, then the bottle 1 is compressed and the label 24 is wound about the compressed bottle, bringing the slot 28 in correspondence of the neck of the bottle, and the same neck is introduced within the slot.

Obviously, the label 24 could be applied on the bottle with a different orientation.

The latching device according to the invention can be included in the bottle or container in anyway, or it may be an appendix of the same, etc.

The latching device according to the invention can be realised in any suitable material: paper, rubber, metal, cloth, etc. Obviously, if during the recycling material, it is wished that the bottle or the container takes again the start shape, it is advisable to use of a paper or like, since it could break if immersed within water or other liquid.

The present invention has been described for illustrative but not limitative purposes according to its embodiment, but it is to be understood that modification and/or changes can be made without departing from the scope of the invention as defined in the enclosed claims.

## Claims

1. Latching device to avoid the expansion of compressible containers after their compression, characterised in that at least one part of the latching device is coupled to the body of the container or to the stopper of the same and another part can be coupled to any point of the surface of the container, or to the neck of the container, to prevent its expansion after its compression.

2. Latching device according to claim 1, characterised in that it is made up of a plurality of annular elements or partially circular crowns, centrally provided with a hole and coupled each other along one side so as to be folded in the rest position with the respective holes coinciding, and to be extensible to extend them in order to substantially take the shape of a strip, so that one of said end annular elements remains coupled to the neck of the container and the other one, after having passed the latching device around said container, couples with the neck of the same container after its compression.

3. Latching device according to claim 2, characterised in that it is removably provided on the neck of said container, or it has the lower annular element fixed on the same neck.

4. Latching device according to claim 2 or 3, characterised in that on the end annular element coupled with the neck after having passed the latching device around the compressed container a grip tongue is provided.

5. Latching device according to claim 1, characterised in that said latching device is comprised of a strip, completely or partially adhesive on its surface.

6. Latching device according to claim 1, characterised in that said latching device is partially elastic and windable around the container body when compressed.

7. Latching device according to claim 6, characterised in that the fixed part is comprised of a ring provided around the neck of the container and from the same neck a second elastic ring extends, said second ring being suitable to be coupled with a projection of the reduced volume container.

8. Latching device according to claim 5, characterised in that one end (4b) of the adhesive strip (2) is provided with a hole coupable with the neck (3) of the container.

9. Latching device according to claim 1, characterised in that said latching device is comprised of a strip having a hole realised in one of its ends to receive the neck of the container during the production or bottling step, or during a following step, a second hole or slot being provided at the opposite end of the strip to receive the neck of the container after the winding of the strip around the compressed container.

10. Latching device according to claim 9, characterised in that on the second hole or slot coupable with the neck of the container after having passed said latching element around the compressed container a grip tongue can be provided.

11. Latching device according to claim 1, characterised in that it is made up of a spiral of concentric rings, said spiral being unwindable so as to bring the outermost ring, after having passed the unwound spiral around the compressed container, to couple with the container neck.

12. Latching device according to claim 11, characterised in that the innermost of said ring coincides with the safety ring of the stopper of the container.

13. Latching device according to claim 11 or 12, characterised in that said rings are coupled by breaking points.

14. Latching device according to claim 11, 12 or 13, characterised in that on the outer ring of the spiral, a grip tongue is provided.

15. Latching device according to one of the claims 1 - 10, characterised in that said latching device is placed, before its use, in any point of the container.

16. Latching device according to one of the claims 1 - 10, characterised in that said latching device is realised, before its use, as a sole body with the label.

17. Latching device according to claim 1, characterised in that it is made up by the label of the container, said label providing one part coupled with the container and a second part provided with means for its detaching from the same container and the spreading of the label, and further at least a slot provided on said label in such a way that when the container is compressed, and the label is wound about the compressed container, said at least one slot couple with the neck of the container.

18. Latching device according to claim 17, characterised in that said label is realised with the same material of the container or by materials compatible for recycling reasons.

19. Latching device according to claim 17 or 18, characterised in that said at least one slot can have a circular, elongated, or irregular shape.

20. Latching device according to claim 17, 18, or 19, characterised in that said first part of the label is fixed on the body of the container, or it can be detached and fixed in a different position for the use of the latching device.

21. Latching device according to claim 17, 18, 19 or 20, characterised in that said means for detaching the label are made up f a lifting edge or tongue.

22. Latching device according to claim 17, 18, 19, 20, 19, 20 or 21, characterised in that it is provided according to every orientation with respect to the body of the container.

23. Latching device according to one of the preceding claims, characterised in that said latching device frees fragrances after its compression.

24. Latching device according to one of the preceding claims, characterised in that it is made up of material, for example paper, that can break during the recycling operations, in order to allow a partial dilatation of the container during these operations.
